# EUROPEAN PATENT SPECIFICATION

(11) **EP 2 930 279 B1**
(45) Date of publication and mention of the grant of the patent: **03.05.2017**
(21) Application number: 15159517.0
(22) Date of filing: 17.03.2015
(51) Int. Cl.: E03D 11/14, F16B 7/04

(54) **COUPLING DEVICE FOR CONNECTING TWO BARS OF A FRAME**
KUPPLUNGSVORRICHTUNG ZUM VERBINDEN ZWEIER STANGEN EINES RAHMENS
DISPOSITIF D'ACCOUPLEMENT POUR RELIER DEUX BARRES D'UN CADRE

(30) Priority: 17.03.2014 IT MI20140435
(43) Date of publication of application: 14.10.2015
(73) Proprietor: VALSIR S.p.A., 25078 Vestone (BS) (IT)
(72) Inventor: Varotti, Mario, 25078 Vestone (IT); Frigo, Flavio, 31050 Ponzano veneto (IT)
(74) Representative: Cernuzzi, Daniele

(56) References cited:
- DE-U1- 9 304 538
- FR-A1- 2 520 817
- US-A1- 2006 255 225

## Description

The present invention relates to a coupling device for connecting two bars of a frame, in particular a support frame of sanitary appliances to be incorporated in a wall system, and a modular system, making use of the coupling device, for making support frames of sanitary appliances and wall systems incorporating such frames.

In the field of the installation of sanitary appliances and related systems, the use of wall systems is increasingly widespread, additional to the structure of the building, which allow a bathroom to be installed in an easy, practical, and clean manner.

Several systems are known allowing the installer to obtain wall systems comprising support frames onto which the sanitary appliances are secured, provided with the necessary connections to the supply and discharge pipes.

Such a system is known, for example, from EP0675292-A1. Also known is a coupling device for coupling a post and a traverse into each other as is disclosed e.g. in DE9304538U.

However, the known systems have some drawbacks, in particular as regards the connection between the bars of the frame. For example, the known systems:
- may be relatively complex to be produced, poorly versatile, composed of a high number of parts;
- may require long assembling times and difficult assembling operations and/or the use of tools;
- may be poorly ergonomic, requiring difficult and/or not very natural movements to be performed by the installer;
- in some cases, at least for the assembling of some parts, the intervention of two operators is required;
- sometimes they do not allow precise adjustments of the distances between the bars and/or other parts, or the recovery of possible clearances;

It is an object of the present invention to provide a coupling device for connecting two bars of a frame, in particular a support frame of sanitary appliances to be incorporated in a wall system, which is free from the prior art drawbacks set forth herein.

Therefore, the present invention relates to a coupling device for connecting two bars of a frame, in particular a support frame of sanitary appliances to be incorporated in a wall system, as defined in essential terms in the appended claim 1 and, in its additional features, in the dependent claims.

Further features and advantages of the present invention will be apparent from the following description of an exemplary, non-limiting embodiment thereof, with reference to the figures of the appended drawings, in which:

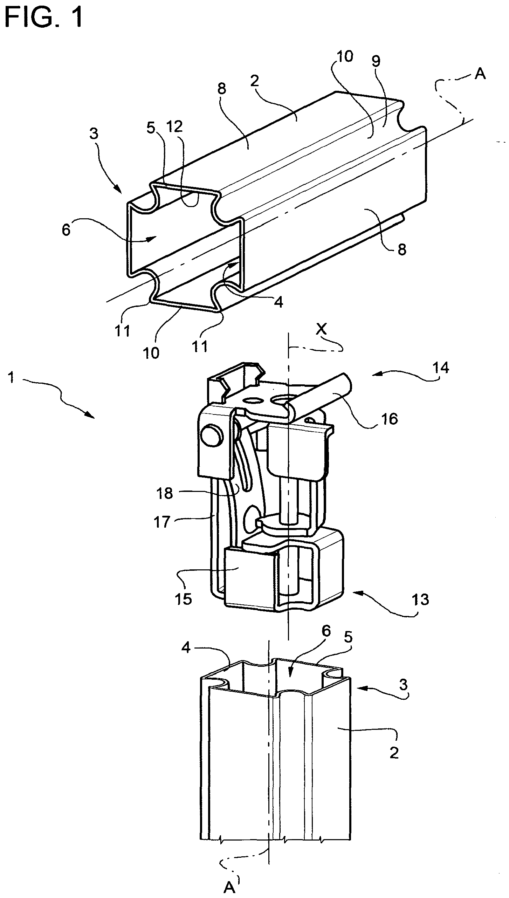

- Fig. 1 is a perspective view of a coupling device for connecting two bars of a frame, in particular a support frame of sanitary appliances to be incorporated in a wall system, in accordance with the invention;
- Figs. 2 and 3 are two perspective views of the coupling device of Fig. 1, shown in respective operative configurations;
- Fig. 4 is an exploded perspective view of the coupling device of Figs. 2 and 3;
- Fig. 5 is a perspective view of a variant of the coupling device of the invention.

In the appended figures, with 1 a coupling device is indicated, for connecting together, in particular 90° one with respect to the other, two bars 2 of a frame, in particular a support frame of sanitary appliances to be incorporated in a wall system.

The bars 2 are profiled tubular bars, for example (but not necessarily) made of a metal material, for example, steel.

Each bar 2 extends along a longitudinal axis A between two axially opposite open ends 3, provided with respective openings 4 defined by respective closed front edges 5, and consists of a tubular section bar which is internally hollow and has a cross-shaped closed cross section. Each bar 2 has a longitudinal inner cavity 6, accessible through the openings 4.

In particular, each bar 2 has two pairs of lateral walls 8 arranged like the sides of a square; the lateral walls 8 of each pair face and are parallel to each other, and are perpendicular to the lateral walls 8 of the other pair.

In addition, the bar 2 has four recessed edges 9, arranged between two lateral walls 8 adjacent and defined by respective longitudinal outer channels 10, parallel to the axis A and having a curved cross section.

Therefore, each lateral wall 8 has two longitudinal opposite edges 11, parallel to the axis A.

Internally, the bar 2 has four inner channels 12, each of which is defined by a lateral wall 8 of the bar 2 and a pair of edges 9.

The coupling device 1 extends along an axis X between two axial ends 13, 14, respectively provided with an insert portion 15, insertable inside the cavity 6 of a first bar 2 through an opening 4; and with a fastening portion 16, apt to hook on a lateral wall 8 of a second bar 2, to be joined perpendicularly to the first bar 2.

In particular, the coupling device 1 comprises a support body 17, a leaf spring 18 supported by the support body 17, and a control member 19, also supported by the support body 17 and acting on the leaf spring 18.

The support body 17 defines a housing zone 21 where the leaf spring 18 and the control member 19 are located.

The support body 17, for example composed of a suitably shaped single monolithic metal piece, comprises for example a base plate 22, extending between the axial ends 13, 14, and two end flanges 23, 24 facing each other, arranged at respective axial ends 13, 14 and substantially perpendicular to the base plate 22.

Each flange 23, 24 has a root edge 25, connected to the base plate 22, and a free end edge 26, opposite the root edge 25.

The two flanges 23, 24 support a longitudinal pin 31, extending between the flanges 23, 24 along the axis X.

A transversal pin 32 extends perpendicular to the axis X between two opposite support ears 33 projecting from the base plate 22 in the proximity of the flange 24 (at the axial end 14).

The insert portion 15 comprises four radial arms 35 cross-shape arranged about the axis X and substantially perpendicular to one another; the arms 35 project radially and then longitudinally (being L-shaped) from the flange 23 towards the opposite flange 24 and are angularly spaced apart from one another by empty spaces.

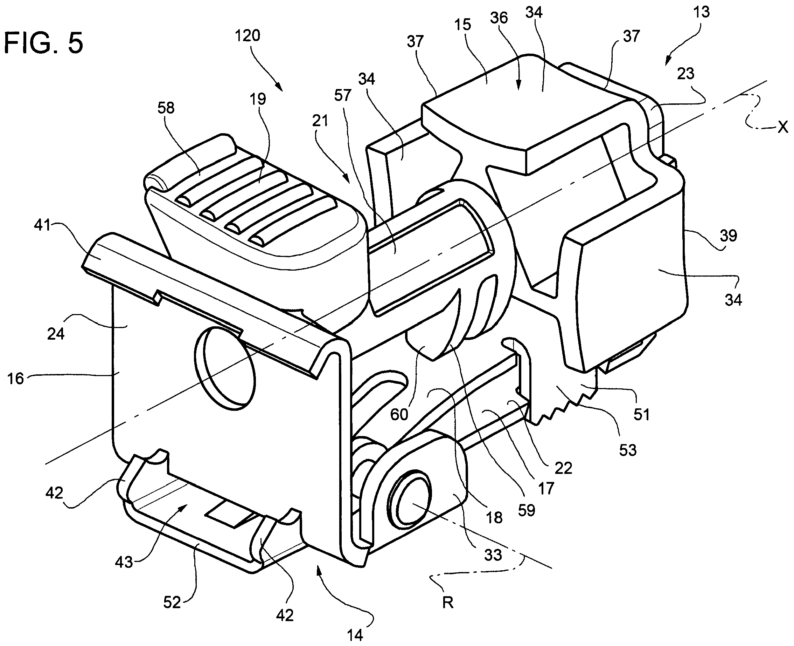

Each arm 35 has a radially outer contact surface 36 and a pair of opposite longitudinal lateral edges 37; preferably, as in the embodiment of Fig. 5, the contact surface 36 of each arm 35 is saddle-shaped (i.e., slightly concave) and the longitudinal lateral edges 37 protrude with respect to a central zone of the arm 35.

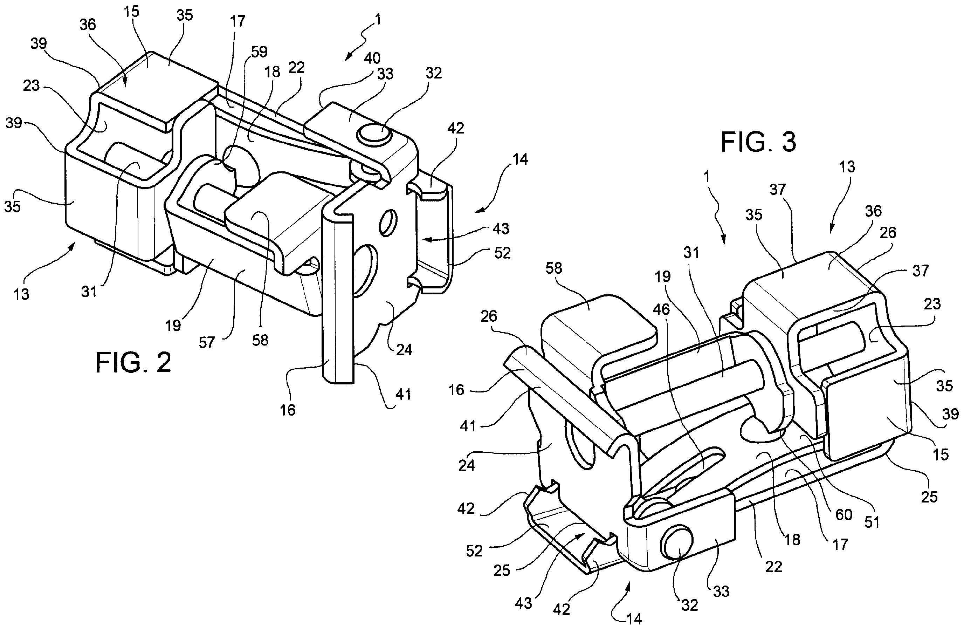

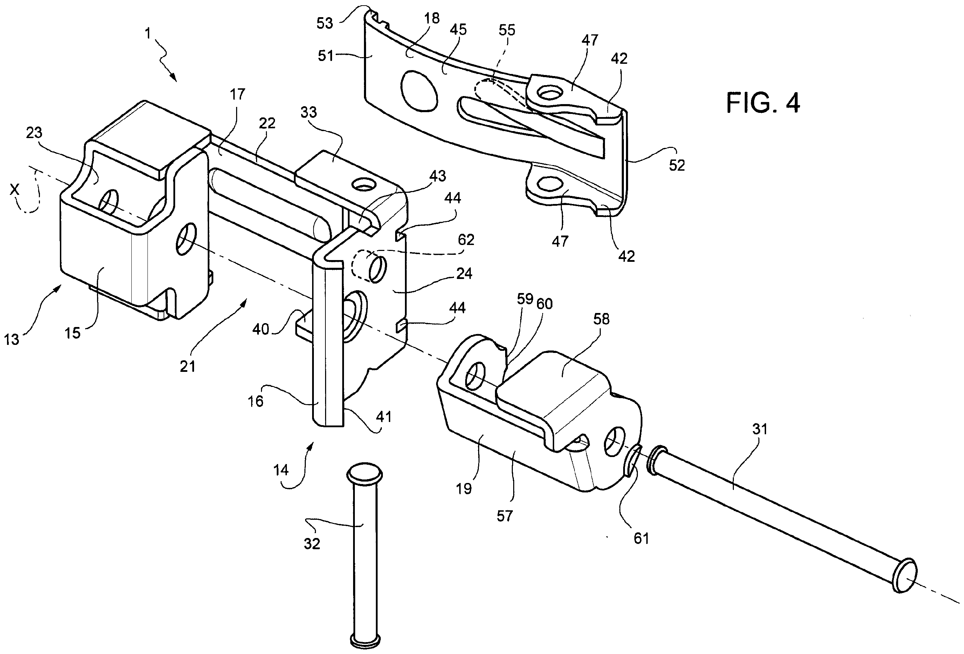

The arms 35 (or some of them) can be composed of respective parts of the support body 17 (embodiment of the Figs. 2-4), or (embodiment of Fig. 5) of respective portions of a different piece, for example, made of plastic (polymer material), mounted around the pin 31 and fitted on the flange 23.

The contact surfaces 36 of the arms 35 are arranged so as to cooperate in contact (via at least their own lateral edges 37) with respective inner side surfaces of respective lateral walls 8 of a bar 2, when the insert portion 15 is inserted in the cavity 6 of the bar 2.

The arms 35 have respective front chamfers 39, facing the axial end 13 and defined for example by respective curved or chamfered surfaces, so as to facilitate the insertion of the insert portion 15 in the cavity 6 even in the presence of small burrs and/or defects of the bar 2.

The arms 35 are shaped so as to insert in respective inner channels 12 of a bar 2.

The insert portion 15 is also provided with an axial abutment 40, formed for example by a stop edge projecting from the base plate 22.

The fastening portion 16 comprises at least one pair of opposite teeth 41, 42, movable with respect to each other operated by the control member 19 and shaped so as to hook respective longitudinal edges 11 of a lateral wall 8 of a bar 2.

In the illustrated examples, at least one first fixed tooth 41 (i.e., integrally fitted to the support body 17) is carried by the flange 24; at least one movable tooth 42 (in the sense that it is movable with respect to the support body 17 and thus to the fixed tooth 41) is positioned on the leaf spring 18.

In the illustrated examples, there are a fixed tooth 41, elongated along the entire free end edge 26, and two movable teeth 42, transversely spaced apart from one another; it is understood that multiple fixed teeth 41 may be present, laterally facing one another, as well as one or more movable teeth 42.

The tooth 41 projects from the free end edge 26 of the flange 24 and is shaped so as to hook a longitudinal edge 11 of a lateral wall 8 of a bar 2.

The support body 17 has a through opening 43, arranged at the axial end 14 and formed in particular in the base plate 22 and in the flange 24.

The opening 43 comprises in particular two end notches 44, formed parallel to one another across the flange 24.

The leaf spring 18 preferably consists of a single monolithic piece, in particular made of a metal material, and comprises a central leaf 45, an elastic arm 46 projecting from the central leaf 45, and two lateral sides 47 folded substantially perpendicular to the central leaf 45.

The leaf spring 18 is positioned between the longitudinal pin 31 and the base plate 22 and is hinged to the transversal pin 32, by two side eyelets 48 formed on respective sides 47.

The leaf spring 18, in particular the central leaf 45, has a first end portion 51, arranged at the axial end 13 of the device 1; and a second end portion 52, axially opposite with respect to the end portion 51 and inserted through the opening 43 and projecting beyond the flange 24.

The end portion 51 is provided with one or more locking teeth 53 protruding towards the base plate 22. For example, the locking teeth 53 are arranged transversely with respect to the central leaf 45 (embodiment of the Figs. 2-4), facing a special transversal slot formed through the base plate 22 at the axial end 13; or the locking teeth 53 project from respective lateral edges of the central leaf 45 towards the base plate 22 (embodiment of Fig. 5).

The end portion 52 is provided with the movable teeth 42 (movable, i.e., integral with the end portion 51 of the leaf spring 18 with respect to the support body 17 and thus to the fixed teeth 41).

The teeth 42 project from the end portion 52 towards the fixed teeth 41 and are shaped so as to hook in turn a longitudinal edge 11 of a lateral wall 8 of a bar 2.

In the illustrated example, the end portion 52 has two teeth 42, laterally spaced from one another and facing and opposite the fixed tooth 41.

The teeth 42 are carried by respective sides 47 of the leaf spring 18 and project beyond the flange 24 and are axially spaced from the flange 24; the sides 47 are inserted in the opening 48 and are aligned to respective notches 44.

The elastic arm 46 is defined by a cut and folded portion of the central leaf 45 of the leaf spring 18. The arm 46 extends from the central leaf 45 and has a free end 55 contacting the base plate 22.

The leaf spring 18 rotates about a rotation axis R defined by the transversal pin 32 and substantially perpendicular to the axis X. The pin 32 is located between the two end portions 51, 52, nearest to the end portion 52. The control member 19 is mounted on the support body 17 and is rotatable via the longitudinal pin 31 about a rotation axis defined by the axis X (or parallel to the axis X).

In particular, the control member 19 is mounted to be rotatable on the pin 31, via a pair of axially spaced holes.

The control member 19 is advantageously composed of a monolithic piece, for example made of plastic (polymer material), and comprises: a support portion 57 fitted around the pin 31 and rotating (on the pin 31 or integral with the pin 31) with respect to the support body 17 about the axis X; a handling portion 58 defined in particular by a small plate radially projecting from the support portion 57; and a cam 59 radially protruding from the support portion 57 and abutting against the leaf spring 18.

The cam 59 has a curved peripheral contact edge 60, with a rounded vertex.

Optionally, as in the embodiment of Fig. 5, the cam 59 has two cam portions axially placed side by side, differently projecting from the support portion 57 and the pin 31 so as to contact respective portions of the leaf spring 18, which is inclined with respect to the axis X and curved with respect to the base plate 22.

By the rotation of the handling portion 58 about the axis X, the coupling device 1 assumes two operative configurations:
- a rest configuration, in which: the leaf spring 18 is not loaded by the cam 59; the locking teeth 53 are retracted in the housing zone 21 (i.e., they do not protrude beyond the base plate 22); the movable teeth 42 are in a spaced position with respect to the fixed teeth 41, being spaced apart therefrom to such an extent as to allow the fastening portion 16 to be mounted on a lateral wall 8 of a bar 2; the handling portion 58 protrudes from the housing zone 21, in particular beyond the free end edge 26 of the flange 24;
- a locking configuration, in which: the leaf spring 18 is loaded by the cam 59, which pushes the leaf spring 18 towards the base plate 22; the locking teeth 53 protrude from the housing zone 21, beyond the base plate 22; the movable teeth 42 are in a close position with respect to the fixed teeth 41, being at such a distance from the fixed tooth 41 as to clamp a lateral wall 8 arranged between the movable teeth 42 and the fixed teeth 41.

The coupling device 1 serves to assemble two bars 2 perpendicular to one another, in a rapid, quick, and safe manner.

In order to connect the two bars 2, one can proceed as follows.

The coupling device 1 is provided in its rest configuration.

The insert portion 15 is inserted in the cavity 6 of a first bar 2. The insert portion 15 is insertable in the cavity 6 at most until bringing the abutment 40 against the front edge 5 of the bar 2; the handling portion 58 remains externally of the cavity 6.

The mechanical interference between the radial arms 35 and the bar 2 is sufficient to keep the bar 2 and the coupling device 1 assembled, which coupling device 1 anyhow remains manually withdrawable from the cavity 6.

Next, the first bar 2, provided with the coupling device 1, is brought closer to the second bar 2, to be joined to the first bar 2.

The fastening portion 16, comprising the flange 24 and the teeth 41, 42 is hooked to a lateral wall 8 of the second bar 2. The hooking occurs easily, effortlessly, and in a direction substantially parallel to the axis X and perpendicular to the second bar 2: in fact, the teeth 41, 42 are in a sufficiently spaced position, optionally aided by the elasticity of the leaf spring 18, to allow the teeth 41, 42 engaging the lateral wall 8 of the bar 2.

Once the second bar 2 has been hooked, all the necessary adjustments to obtain a proper alignment and leveling of the bars 2 can be made.

In particular, it is possible to axially adjust the position of the coupling device 1 with respect to the first bar 2, making the insert portion 15 to slide in the cavity 6 of the first bar 2; and to arrange the coupling device 1 along the second bar 2, making the fastening portion 16 to slide along the lateral wall 8, engaged by the teeth 41, 42.

Finally, the control member 19 is manually rotated, acting on the handling portion 58, to bring the coupling device 1 in the locking configuration and to block the coupling device 1 with respect to both bars 2.

In fact, the rotation of the control member 19 about the axis X moves the cam 59 to load the leaf spring 18, which is pushed, against the elastic action of the arm 46, towards the base plate 22.

In particular, the leaf spring 18 rotates about the rotation axis R defined by the transversal pin 32, pushed by the cam 59: the end portion 52 with the locking teeth 53 is pushed towards the base plate 22, until bringing the locking teeth 53 beyond the base plate 22; the locking teeth 53 contact the lateral wall 8 arranged beyond the base plate 22 and are pressed against the lateral wall 8, possibly knocking in in the lateral wall 8.

At the same time, the opposite end portion 51, with the movable teeth 42, moves towards the free end edge 26 of the flange 24, bringing the movable teeth 42 closer to the fixed teeth 41, hence clamping the lateral wall 8 of the second bar 2 between the teeth 41, 42. The sides 47 enter the notches 44.

The complete locking is obtained by the handling portion 58 of about 90°; however, lower rotations obtain a progressive loading of the leaf spring 18, useful for a pre-assembling of the bars 2, which allows a fine tuning of the alignments.

When the handling portion 58 ends its rotation, the control member 19 gets to a dead point, at which the cam 59 is substantially perpendicular to the leaf spring 18; the control member 19 is provided with an angular stop 61 which contacts, when the dead point is reached, a projection 62 projecting from the flange 24 in the housing zone 21, preventing the further rotation of the control member 19.

Reaching the locking configuration is perceived by the operator as a "clink", emitted when the dead point is passed.

It is possible to see at a glance whether the device 1 is properly clamped by looking at the position of the handling portion 58, thus ensuring a higher safety of use: if the handling portion 58 protrudes beyond the flange 24, the coupling device 1 is not in the locking configuration.

If it is necessary, it is possible to open and close the coupling device 1 (hence to release the bars 2) multiple times and without using tools.

The actuation of the handling portion 58 is frontal to the operator and is very ergonomic and intuitive, not requiring particular efforts.

It is also possible to hook at 90° multiple bars together on the same plane. In fact, the coupling device 1 remains inside the overall dimensions of the single bar 2 and ensures a 90° clamping of the bars 2 with the straight angle remaining completely free and usable to house structures and/or accessories.

Therefore, assembling is rapid, quick, and safe.

In addition, the invention allows any adjustments, both longitudinally along the axis A of the bar 2 housing the coupling device 1 (so as to make up also for the possible cutting errors of the bar 2 along the axis A), and transversally to the coupling device 1, so as to obtain a proper perpendicularity between the bars 2.

By arranging a plurality of bars 2 and coupling devices 1, it is possible to make a support frame of sanitary appliances to be incorporated in a wall system.

Therefore, the invention also provides a modular system, making use of the coupling device 1 described above, for making support frames of sanitary appliances and wall systems incorporating such frames.

Finally, it is understood that further modifications and variations not departing from the scope of the appended claims can be made to the coupling device described and illustrated herein.

## Claims

1. A coupling device (1) for connecting two bars (2) of a frame, in particular a support frame of sanitary appliances to be incorporated in a wall system, the coupling device (1) extending along an axis (X) between two axial ends (13, 14), respectively provided with an insert portion (15), insertable inside a first bar (2); and with a fastening portion (16) comprising at least one fixed tooth (41), the fastening portion (16) being apt in use to hook on a lateral wall (8) of a second bar (2) to be joined perpendicularly to the first bar (2) via the at least one fixed tooth (41); the coupling device (1) comprising a support body (17); a leaf spring (18) elastically deformable and supported by the support body (17); **characterised by** a control member (19) rotating about the axis (X) and acting on the leaf spring (18) via a cam (59); wherein the leaf spring (18) has a first and a second axially opposite end portions (51, 52), respectively provided with at least one locking tooth (53) and at least on movable tooth (42) facing said at least one fixed tooth (41); and wherein rotation of the control member (19) about the axis (X) moves the cam (59) to push against the leaf spring (18) which deforms elastically so as to rotate in opposite directions said end portions (51, 52) and the respective teeth (53, 42); the at least one locking tooth (53) of the first end portion (51) of the leaf spring (18) being pushed beyond the base plate (22) of the support body (17) for blocking the insert portion (15) in use inside the first bar (2); the at least one movable tooth (42) of the second end portion (52) being brought closer to the at least one fixed tooth (41) for in use hooking the second bar (2).

2. A device according to claim 1, wherein the at least one fixed tooth (41) and the at least one movable tooth (42) form a pair of opposite teeth (41, 42), movable with respect to each other operated by the control member (19) via the cam (59) and shaped so as to in use hook respective longitudinal edges (11) of a lateral wall (8) of a bar (2); the pair of opposite teeth (41, 42) projecting towards each other from a free end edge (26) of the support body (17) and from the end portion (52) of the leaf spring (18), respectively.

3. A device according to claim 1 or 2, wherein the leaf spring (18) comprises a central leaf (45) and an elastic arm (46) projecting from the central leaf (45) and rests against the support body (17).

4. A device according to one of the preceding claims, wherein the first end portion (51) of the leaf spring (18) is provided with the at least one locking tooth (53) protruding towards the base plate (22) of the support body (17).

5. A device according to one of the preceding claims, wherein the second end portion (52) of the leaf spring (18) is inserted through an opening (43) formed in the support body (17) and protrudes beyond an end flange (24) of the support body (17), and is provided with the at least one movable tooth (42), movable with respect to the support body (17) integral with the second end portion (52) of the leaf spring (18) and with respect to the at least one fixed tooth (41), integrally fitted to the support body (17).

6. A device according to one of the preceding claims, wherein the leaf spring (18) is hinged to the support body (17) and rotates about a rotation axis (R) substantially perpendicular to the axis (X).

7. A device according to one of the preceding claims, wherein the control member (19) comprises: a support portion (57) fitted around a longitudinal pin (31) supported by the support body (17) and rotating with respect to the support body (17) about the axis (X); a handling portion (58) radially projecting from the support portion (57); and the cam (59) radially protruding from the support portion (57) and abutting against the leaf spring (18).

8. A device according to one of the preceding claims, wherein by rotation of the handling portion (58) about the axis (X), the coupling device (1) selectively assumes:
- a rest configuration, in which the leaf spring (18) is not loaded by the cam (59) ; the at least one locking tooth (53) is retracted in the support body (17) and do not protrude beyond the support body (17); the at least one fixed tooth (41) and the at least one movable tooth (42) are in a spaced position, being spaced apart from each other to such an extent as to allow the fastening portion (16) to be in use mounted on a lateral wall (8) of a bar (2);
- a locking configuration, in which the leaf spring (18) is loaded by the cam (59), which pushes the leaf spring (18) towards the support body (17); the at least one locking tooth (53) protrude from the support body (17); the at least one fixed tooth (41) and the at least one movable tooth (42) are in a close position and at such a distance from each other as to in use clamp a lateral wall (8) of a bar (2) arranged between the teeth (41, 42).

9. A device according to one of the preceding claims, wherein the leaf spring (18) consists of a single monolithic piece, in particular made of metal material.

10. A device according to one of the preceding claims, wherein the insert portion (15) comprises four radial arms (35) cross-shape arranged about the axis (X) and substantially perpendicular to one another; the arms (35) projecting radially and then longitudinally, being L-shaped, from a first axial end (13) of the support body (17) and being angularly spaced apart from one another.

11. A device according to claim 10, wherein each arm (35) has a radially outer saddle-shape contact surface (36) and a pair of opposite longitudinal lateral edges (37), parallel to the axis (X) and protruding with respect to a central zone of the arm (35).

12. A device according to claim 10 or 11, wherein the arms (35) have respective front chamfers (39).

13. A modular system, in particular for making support frames of sanitary appliances and wall systems incorporating such frames, comprising at least two profiled tubular bars (2) and at least one coupling device (1) according to one of the preceding claims for connecting the two bars (2).

## Patentansprüche

1. Kupplungsvorrichtung (1) zum Verbinden zweier Stangen (2) eines Rahmens, insbesondere eines Stützrahmens sanitärer Anlagen, die in ein Wandsystem eingebaut werden sollen, wobei die Kopplungsvorrichtung (1) sich entlang einer Achse (X) zwischen zwei axialen Enden (13, 14) erstreckt, die jeweils mit einem Einsatzabschnitt (15) versehen sind, der in eine erste Stange (2) einsetzbar ist; und mit einem Befestigungsabschnitt (16), der wenigstens einen festen Zahn (41) umfasst, wobei der Befestigungsabschnitt (16) in der Verwendung geeignet ist, auf einer Seitenwand (8) einer zweiten Stange (2) zu verhaken, um über den wenigstens einen festen Zahn (41) senkrecht zu der ersten Stange (2) verbunden zu werden; wobei die Kopplungsvorrichtung (1) einen Stützkörper (17) umfasst; wobei eine Blattfeder (18) elastisch verformbar ist und von dem Stützkörper (17) gestützt wird; **gekennzeichnet durch** ein Steuerelement (19), das sich um die Achse (X) dreht und über eine Nocke (59) auf die Blattfeder (18) wirkt; wobei die Blattfeder (18) einen ersten und einen zweiten axial entgegengesetzten Endabschnitt (51, 52) hat, der jeweils mit wenigstens einem Sperrzahn (53) und wenigstens einem beweglichen Zahn (42) versehen ist, welcher dem wenigstens einen festen Zahn (41) zugewandt ist; und wobei die Drehung des Steuerelements (19) um die Achse (X) die Nocke (59) bewegt, um gegen die Blattfeder (18) zu drücken, die sich elastisch verformt, um die Endabschnitte (51, 52) und die jeweiligen Zähne (53, 42) in entgegengesetzte Richtungen zu drehen; wobei der wenigstens eine Sperrzahn (53) des ersten Endabschnitts (51) der Blattfeder (18) über die Grundplatte (22) des Stützkörpers (17) hinaus geschoben wird, um den Einsatzabschnitt (15) in der Verwendung im Inneren der ersten Stange (2) zu sperren; wobei der wenigstens eine bewegliche Zahn (42) des zweiten Endabschnitts (52) in der Verwendung näher an den wenigstens einen festen Zahn (41) gebracht wird, um die zweite Stange (2) zu verhaken.

2. Vorrichtung nach Anspruch 1, wobei der wenigstens eine feste Zahn (41) und der wenigstens eine bewegliche Zahn (42) ein Paar entgegengesetzter Zähne (41, 42) bilden, die in Bezug aufeinander beweglich sind, die von dem Steuerelement (19) über die Nocke (59) betätigt werden und derart geformt sind, dass sie in der Verwendung jeweilige Längskanten (11) einer Seitenwand (8) einer Stange (2) verhaken; wobei das Paar entgegengesetzter Zähne (41, 42) jeweils von einer freien Endkante (26) des Stützkörpers (17) und von dem Endabschnitt (52) der Blattfeder (18) aufeinander zu vorstehen.

3. Vorrichtung nach Anspruch 1 oder 2, wobei die Blattfeder (18) ein Mittelblatt (45) und einen elastischen Arm (46), der von dem Mittelblatt (45) vorsteht und gegen den Stützkörper (17) ruht, umfasst.

4. Vorrichtung nach einem der vorhergehenden Ansprüche, wobei der erste Endabschnitt (51) der Blattfeder (18) mit wenigstens einem Sperrzahn (53) versehen ist, der in Richtung der Grundplatte (22) des Stützkörpers (17) vorsteht.

5. Vorrichtung nach einem der vorhergehenden Ansprüche, wobei der zweite Endabschnitt (52) der Blattfeder (18) durch eine Öffnung (43), die in dem Stützkörper (17) ausgebildet ist, eingesetzt wird und über einen Endflansch (24) des Stützkörpers (17) hinaus vorsteht und mit dem wenigstens einen beweglichen Zahn (42) versehen ist, der in Bezug auf den Stützkörper (17) integral mit dem zweiten Endabschnitt (52) der Blattfeder (18) und in Bezug auf den wenigstens einen festen Zahn (41), der integral an den Stützkörper (17) eingepasst ist, beweglich ist.

6. Vorrichtung nach einem der vorhergehenden Ansprüche, wobei die Blattfeder (18) gelenkig an dem Stützkörper (17) befestigt ist und sich um eine Drehachse (R) im Wesentlichen senkrecht zu der Achse (X) dreht.

7. Vorrichtung nach einem der vorhergehenden Ansprüche, wobei das Steuerelement (19) umfasst: einen Stützabschnitt (57), der um einen Längsstift (31), der von dem Stützkörper (17) gestützt wird, herum angepasst ist und sich in Bezug auf den Stützkörper (17) um die Achse (X) dreht; einen Handhabungsabschnitt (58), der radial von dem Stützabschnitt (57) vorsteht; und die Nocke (59), die radial von dem Stützabschnitt (57) vorsteht und gegen die Blattfeder (18) anliegt.

8. Vorrichtung nach einem der vorhergehenden Ansprüche, wobei die Kopplungsvorrichtung (1) durch Drehen des Handhabungsabschnitts (58) um die Achse (X) selektiv einnimmt:
- eine Ruhekonfiguration, in der die Blattfeder (18) nicht von der Nocke (59) gespannt wird; der wenigstens eine Sperrzahn (53) in den Stützkörper (17) zurück gezogen wird und nicht über den Stützkörper (17) hinaus vorsteht; der wenigstens eine feste Zahn (41) und der wenigstens eine bewegliche Zahn (42) in einer beabstandeten Position sind, wobei sie voneinander in einem derartigen Maß beabstandet sind, dass sie zulassen, dass der Befestigungsabschnitt (16) in der Verwendung auf eine Seitenwand (8) einer Stange (2) montiert wird;
- eine Sperrkonfiguration, in der die Blattfeder (18) von der Nocke (59) gespannt wird, die die Blattfeder (18) in Richtung des Stützkörpers (17) schiebt; wobei der wenigstens eine Sperrzahn (53) von dem Stützkörper (17) vorsteht; wobei der wenigstens eine feste Zahn (41) und der wenigstens eine bewegliche Zahn (42) in einer Schließposition und in einem derartigen Abstand voneinander sind, um in der Verwendung eine Seitenwand (8) einer Stange zwischen den Zähnen (41, 42) einzuspannen.

9. Vorrichtung nach einem der vorhergehenden Ansprüche, wobei die Blattfeder (18) aus einem einzigen monolithischen Teil besteht, der insbesondere aus Metallmaterial hergestellt ist.

10. Vorrichtung nach einem der vorhergehenden Ansprüche, wobei der Einsatzabschnitt (15) vier radiale Arme (35) umfasst, die in einer Kreuzform um die Achse (X) und im Wesentlichen senkrecht zueinander angeordnet sind; wobei die Arme (35) von einem ersten axialen Ende (13) des Stützkörpers radial und dann längs vorstehen, L-förmig sind und winkelig voneinander beabstandet sind.

11. Vorrichtung nach Anspruch 10, wobei jeder Arm (35) eine radial äußere sattelförmige Kontaktoberfläche (36) und ein Paar entgegengesetzter Längsseitenkanten (37) hat, die parallel zu der Achse (X) sind und in Bezug auf eine Mittelzone des Arms (35) vorstehen.

12. Vorrichtung nach Anspruch 10 oder 11, wobei die Arme (35) jeweilige vordere Abschrägungen (39) haben.

13. Modulares System, insbesondere zur Herstellung von Stützrahmen sanitärer Anlagen und Wandsysteme, die derartige Rahmen eingebaut haben, das wenigstens zwei rohrförmige Profilstangen (2) und wenigstens eine Kopplungsvorrichtung (1) nach einem der vorhergehenden Ansprüche zum Verbinden der zwei Stangen (2) umfasst.

## Revendications

1. Dispositif d'accouplement (1) pour la liaison de deux barres (2) d'un cadre, en particulier d'un cadre de support d'appareils sanitaires à incorporer dans un système de paroi, le dispositif d'accouplement (1) s'étendant le long d'un axe (X) entre deux extrémités axiales (13, 14), respectivement dotées d'une partie d'insert (15), insérable dans une première barre (2) ; et avec une partie de fixation (16), comprenant au moins une dent fixe (41), la partie de fixation (16) étant apte en utilisation à s'accrocher sur une paroi latérale (8) d'une seconde barre (2), à joindre perpendiculairement à la première barre (2), par le biais de l'au moins une dent fixe (41) ; le dispositif d'accouplement (1) comprenant un corps de support (17) ; un ressort à lames (18) déformable élastiquement et supporté par le corps de support (17) ; **caractérisé par** un élément de commande (19) tournant autour de l'axe (X) et agissant sur le ressort à lames (18) par le biais d'une came (59) ; dans lequel le ressort à lames (18) présente une première et une seconde parties d'extrémité opposées axialement (51, 52), respectivement dotées d'au moins une dent de verrouillage (53) et d'au moins une dent mobile (42) faisant face à ladite au moins une dent fixe (41) ; et dans lequel la rotation de l'élément de commande (19) autour de l'axe (X) déplace la came (59) pour pousser contre le ressort à lames (18) qui se déforme élastiquement de sorte à tourner dans des directions opposées lesdites parties d'extrémité (51, 52) et les dents respectives (53, 42) ; l'au moins une dent de verrouillage (53) de la première partie d'extrémité (51) du ressort à lames (18) étant poussée au-delà de la plaque de base (22) du corps de support (17) pour bloquer la partie d'insert (15) en utilisation dans la première barre (2) ; l'au moins une dent mobile (42) de la seconde partie d'extrémité (52) étant amenée plus près de l'au moins une dent fixe (41) pour accrocher en utilisation la seconde barre (2).

2. Dispositif selon la revendication 1, dans lequel l'au moins une dent fixe (41) et l'au moins une dent mobile (42) forment une paire de dents opposées (41, 42), mobiles l'une par rapport à l'autre actionnées par l'élément de commande (19) par le biais de la came (59) et formées de sorte à accrocher en utilisation des arêtes longitudinales respectives (11) d'une paroi latérale (8) d'une barre (2) ; la paire de dents opposées (41, 42) faisant saillie l'une vers l'autre depuis une arête d'extrémité libre (26) du corps de support (17) et depuis la partie d'extrémité (52) du ressort à lames (18) respectivement.

3. Dispositif selon la revendication 1 ou 2, dans lequel le ressort à lames (18) comprend une lame centrale (45) et un bras élastique (46) faisant saillie depuis la lame centrale (45) et repose contre le corps de support (17).

4. Dispositif selon l'une des revendications précédentes, dans lequel la première partie d'extrémité (51) du ressort à lames (18) est dotée de l'au moins une dent de verrouillage (53) faisant saillie vers la plaque de base (22) du corps de support (17).

5. Dispositif selon l'une des revendications précédentes, dans lequel la seconde partie d'extrémité (52) du ressort à lames (18) est insérée par une ouverture (43) formée dans le corps de support (17) et fait saillie au-delà d'une bride d'extrémité (24) du corps de support (17), et est dotée de l'au moins une dent mobile (42), mobile par rapport au corps de support (17) formé intégralement avec la seconde partie d'extrémité (52) du ressort à lames (18) et par rapport à l'au moins une dent fixe (41) intégralement insérée dans le corps de support (17).

6. Dispositif selon l'une des revendications précédentes, dans lequel le ressort à lames (18) est articulé au corps de support (17) et tourne autour d'un axe de rotation (R) sensiblement perpendiculaire à l'axe (X).

7. Dispositif selon l'une des revendications précédentes, dans lequel l'élément de commande (19) comprend : une partie de support (57) insérée autour d'une broche longitudinale (31) supportée par le corps de support (17) et tournant par rapport au corps de support (17) autour de l'axe (X) ; une partie de manipulation (58) faisant saillie radialement depuis la partie de support (57) ; et la came (59) faisant saillie radialement depuis la partie de support (57) et butant contre le ressort à lames (18).

8. Dispositif selon l'une des revendications précédentes, dans lequel par rotation de la partie de manipulation (58) autour de l'axe (X), le dispositif d'accouplement (1) adopte sélectivement :
- une configuration de repos, dans laquelle le ressort à lames (18) n'est pas chargé par la lame (59) ; l'au moins une dent de verrouillage (53) est rétractée dans le corps de support (17) et ne fait pas saillie au-delà du corps de support (17) ; l'au moins une dent fixe (41) et l'au moins une dent mobile (42) sont dans une position espacée, étant espacées l'une de l'autre jusqu'à une étendue telle qu'elles permettent à la partie de fixation (16) d'être montée en utilisation sur une paroi latérale (8) d'une barre (2) ;
- une configuration de verrouillage, dans laquelle le ressort à lames (18) est chargé par la came (59) qui pousse le ressort à lames (18) vers le corps de support (17) ; l'au moins une dent de verrouillage (53) fait saillie depuis le corps de support (17) ; l'au moins une dent fixe (41) et l'au moins une dent mobile (42) sont dans une position proche et à une telle distance l'une de l'autre qu'elles serrent en utilisation une paroi latérale (8) d'une barre (2) agencée entre les dents (41, 42).

9. Dispositif selon l'une des revendications précédentes, dans lequel le ressort à lames (18) est constitué d'une seule pièce monolithique, en particulier réalisée en matériau métallique.

10. Dispositif selon l'une des revendications précédentes, dans lequel la partie d'insert (15) comprend quatre bras radiaux (35) agencés en forme de croix autour de l'axe (X) et sensiblement perpendiculaires les uns aux autres ; les bras (35) faisant saillie radialement et ensuite longitudinalement, étant en forme de L, depuis une première extrémité axiale (13) du corps de support (17) et étant espacés angulairement les uns des autres.

11. Dispositif selon la revendication 10, dans lequel chaque bras (35) présente une surface de contact en forme de selle radialement extérieure (36) et une paire d'arêtes latérales longitudinales opposées (37), parallèles à l'axe (X) et faisant saillie par rapport à une zone centrale du bras (35).

12. Dispositif selon la revendication 10 ou 11, dans lequel les bras (35) présentent des chanfreins avant respectifs (39).

13. Système modulaire, en particulier pour fabriquer des cadres de support d'appareils sanitaires et systèmes de paroi incorporant de tels cadres, comprenant au moins deux barres tubulaires (2) profilées et au moins un dispositif d'accouplement (1) selon l'une des revendications précédentes pour la liaison des deux barres (2).
